# EUROPÄISCHE PATENTSCHRIFT

(11) **EP 3 240 427 B1**
(45) Veröffentlichungstag und Bekanntmachung des Hinweises auf die Patenterteilung: **18.05.2022**
(21) Anmeldenummer: 15813017.9
(22) Anmeldetag: 14.12.2015
(51) Int. Cl.: A22C 21/02

(54) **VORRICHTUNG UND VERFAHREN ZUM AUTOMATISCHEN ENTFIEDERN VON GETÖTETEN GEFLÜGELTIEREN**
APPARATUS AND METHOD FOR AUTOMATICALLY PLUCKING DEAD FOWL
DISPOSITIF ET PROCÉDÉ POUR DÉPLUMER DE LA VOLAILLE MORTE

(30) Priorität: 29.12.2014 DE 102014019340
(43) Veröffentlichungstag der Anmeldung: 08.11.2017
(73) Patentinhaber: BAADER Food Systems Denmark A/S, 8380 Trige (DK)
(72) Erfinder: THRANE, Uffe, 8450 Hammel (DK)
(74) Vertreter: Stork Bamberger Patentanwälte PartmbB
(86) Internationale Anmeldenummer: PCT/EP2015/079632
(87) Internationale Veröffentlichungsnummer: WO 2016/107731

(56) Entgegenhaltungen:
- WO-A1-2012/175083
- DE-A1- 2 021 144
- US-A- 3 402 424
- US-A- 4 179 772

## Beschreibung

Die Erfindung betrifft eine Vorrichtung, ausgebildet und eingerichtet zum automatischen Entfiedern getöteter Geflügeltiere, umfassend ein Transportmittel, ausgebildet und eingerichtet zum frei nach unten hängenden Transport von an ihren Füßen aufgehängten Geflügeltieren in Transportrichtung T entlang eines Transportpfads, sowie zwei beabstandet zueinander und auf einander gegenüberliegenden Seiten des Transportpfads angeordnete und einen Kanal bildende Seitenwangen, die auf ihren einander zugekehrten, dem Transportpfad zugewandten Innenseiten jeweils Mittel zum Entfiedern der durch den Kanal transportierten Geflügeltiere aufweisen, wobei die Mittel zum Entfiedern mit den zu entfiedernden Geflügeltieren in Kontakt bringbar sind.

Des Weiteren betrifft die Erfindung ein Verfahren zum automatischen Entfiedern getöteter Geflügeltiere, umfassend die Schritte: Transportieren der an ihren Füßen aufgehängten und frei nach unten hängenden Geflügeltiere in Transportrichtung T entlang eines Transportpfads mittels eines Transportmittels, Entfiedern der Geflügeltiere während des Transports der Geflügeltiere entlang eines durch zwei beabstandet zueinander und auf einander gegenüberliegenden Seiten des Transportpfads angeordnete Seitenwangen gebildeten Kanals mittels jeweils an den Innenseiten der Seitenwangen angeordneten Mitteln zum Entfiedern, indem die Mittel zum Entfiedern beim Transport der Geflügeltiere durch den Kanal mit den Geflügeltieren in Kontakt kommen.

Solche Vorrichtungen und Verfahren kommen in der Geflügel verarbeitenden Industrie zum Einsatz, um das bereits getötete Geflügel zu entfiedern. Dazu werden die getöteten Geflügeltiere an ihren Füßen bzw. Beinen hängend und vertikal nach unten ausgerichtet durch den Kanal transportiert. Beim Eintritt in den Kanal greifen die zu beiden Seiten des Kanals angeordneten Mittel zum Entfiedern in die Federn der Geflügeltiere ein. Die Geflügeltiere werden üblicherweise kontinuierlich entlang des Transportpfads durch den Kanal transportiert. Dabei passieren die Geflügeltiere über die Länge des Kanals die Mittel zum Entfiedern. Damit die Mittel zum Entfiedern auch in Kontakt mit den zu bearbeitenden Geflügeltieren kommen, ist der Kanal entsprechend der Größe der Geflügeltiere eng ausgebildet. Dadurch, dass die Geflügeltiere an ihren Füßen aufgehängt und frei nach unten hängend transportiert werden, wird das Einfädeln derselben in den engen Kanal erschwert, da die Geflügeltiere an ihrem freien Kopfende beim Auftreffen auf die Mittel zum Entfiedern innerhalb des Kanals entgegen der Transportrichtung ausgelenkt werden. Durch den Vorgang des Entfiederns kommt es vor, dass die Geflügeltiere entgegen der Transportrichtung zurückgehalten werden bzw. aktiv entgegen der Transportrichtung gedrückt werden, wodurch sie aus dem Transportmittel gehoben werden können. Des Weiteren besteht die Problematik, dass die Geflügeltiere so weit nach oben bewegt werden, dass sie teilweise oder ganz aus dem Eingriff mit den Mitteln zum Entfiedern bewegt werden, wodurch die Effizienz der Entfiederung deutlich gesenkt wird.

Um das Einfädeln der Geflügeltiere in die Vorrichtung und das Fördern der Geflügeltiere innerhalb der Vorrichtung zu unterstützen, wurde im Stand der Technik bisher versucht, vor dem Eintrittsbereich in den Kanal Führungsschienen anzuordnen, die sich in Transportrichtung verjüngen, und zwar bis auf eine Breite, die etwa der Breite des Abstandes der Seitenwangen entspricht. Damit konnten die vorgenannten Probleme aber nicht beseitigt werden. Des Weiteren wurde versucht, die beiden Seitenwangen der Vorrichtung leicht konvergierend anzuordnen. Mit anderen Worten ist der Abstand der beiden Seitenwangen im Eintrittsbereich der Geflügeltiere bei den bekannten Lösungen größer als im Austrittsbereich, um das Einführen bzw. Eintreten der Geflügeltiere in den Kanal zu vereinfachen. Diese bekannte Anordnung führt jedoch zu einer Reduzierung der Leistungsfähigkeit der Vorrichtung, da aufgrund des vergrößerten Abstands der Seitenwangen nicht sämtliche Mittel zum Entfiedern über die gesamte Länge des Kanals in Eingriff mit den Geflügeltieren kommen.

Vorrichtungen der gattungsgemäßen Art sind in der DE 20 21 144 A1, der US 4 179 772 und der US 3 402 424 A beschrieben.

Der Erfindung liegt somit die Aufgabe zugrunde, eine einfache und leistungsstarke Vorrichtung zum automatischen Entfiedern von getöteten Geflügeltieren zu schaffen, die eine verbesserte Zuführung der Geflügeltiere zwischen die Seitenwangen und deren Mittel zum Entfiedern gewährleistet. Die Aufgabe besteht weiterhin darin, ein entsprechendes Verfahren vorzuschlagen.

Diese Aufgabe wird durch eine Vorrichtung gemäß Anspruch 1 dadurch gelöst, dass die Vorrichtung ein stationäres Mittel zum aktiven Unterstützen des Eintretens der Geflügeltiere zwischen die beiden Seitenwangen und die daran angeordneten Mittel zum Entfiedern umfasst, das im Eintrittsbereich der Geflügeltiere in den Kanal angeordnet ist, wobei das Mittel zum aktiven Unterstützen des Eintretens der Geflügeltiere zwischen die beiden Seitenwangen zur Aufbringung einer mechanischen Kraftkomponente in Transportrichtung T der Geflügeltiere ausgebildet und eingerichtet. Durch das Vorsehen eines stationären Mittels im Eingangsbereich des Kanals, also in Transportrichtung T unmittelbar vor dem Kanal, ist ein einfaches und sicheres Unterstützen des Einfädelns bzw. Hineindrückens der Geflügeltiere zwischen die Seitenwangen geschaffen. Mit der erfindungsgemäßen Ausbildung wird eine automatische und produktschonende Zuführung der Geflügeltiere in den Kanal ermöglicht. Das bedeutet, dass die Geflügeltiere beim Eintritt zwischen die Seitenwangen von dem Mittel gegriffen werden und dadurch einen aktiven und mechanischen Impuls in Transportrichtung T erhalten, so dass das Einfädeln der Geflügeltiere erleichtert ist. Der Begriff "gegriffen" bedeutet in diesem Zusammenhang, dass das Mittel zum aktiven Unterstützen des Eintretens der Geflügeltiere zwischen die beiden Seitenwangen in Wirkverbindung mit den Geflügeltieren tritt und dadurch eine Kraftkomponente auf die Geflügeltiere ausübt.

Eine bevorzugte Weiterbildung der Erfindung zeichnet sich dadurch aus, dass das Mittel zum aktiven Unterstützen des Eintretens der Geflügeltiere zwischen die beiden Seitenwangen zur Aufbringung einer vertikal nach unten gerichteten Kraftkomponente ausgebildet und eingerichtet ist. Damit wird die vertikale Streckung der Geflügelkörper unterstützt, so dass die Geflügeltiere beim Eintritt zwischen die Seitenwangen und die Mittel zum Entfiedern über ihre ganze Länge mit den Mitteln zum Entfiedern in Kontakt treten können. Des Weiteren bewirkt die vertikal nach unten gerichtete Kraftkomponente, dass die Geflügeltiere sicher im Schäkel gehalten werden und insbesondere bei einem Impuls entgegen der Transportrichtung T gerade nicht aus diesem nach oben herausgedrückt werden. Weiterhin bewirkt die erfindungsgemäße Ausbildung, dass die Geflügeltiere stets mit allen Mitteln zum Entfiedern in Kontakt kommen, wodurch die Effizient der Entfiederung verbessert ist.

Zweckmäßigerweise sind die Seitenwangen durchgängig parallel zueinander angeordnet und ausgerichtet und an ihren Innenseiten sind jeweils mehrere stationäre Entfiederungsköpfe als Mittel zum Entfiedern rotierend antreibbar gelagert. Durch die stationären Entfiederungsköpfe, die gerade nicht mit den Geflügeltieren in Transportrichtung T mitlaufend sind, kann über die gesamte Länge des Kanals eine wirksame Entfiederung ausgeführt werden. Dadurch, dass der Kanal durchgängig mit gleicher Breite ausgebildet ist, die Seitenwangen also durchgängig parallel verlaufen, kommen sämtliche über die gesamte Länge des Kanals angeordneten Entfiederungsköpfe in gleicher und gleichmäßiger Weise in Eingriff mit den Geflügeltieren, so dass eine gesteigerte Leistung bei verbesserter Zuführung der Geflügeltiere erreicht wird.

Vorteilhafterweise umfasst das Mittel zum aktiven Unterstützen des Eintretens der Geflügeltiere zwischen die beiden Seitenwangen mindestens zwei rotierend antreibbare Rotationskörper, die auf einander gegenüberliegenden Seiten des Transportpfads angeordnet sind. Die beiden einander gegenüberliegenden Rotationskörper können gleich oder unterschiedlich ausgebildet sein. Die beiden das Mittel bildenden Rotationskörper sind zum gleichzeitigen Kontakt aufnehmen mit dem zu pushenden Geflügeltier ausgebildet und eingerichtet. Durch die Rotation der Rotationskörper wird die Kraftkomponente in Transportrichtung T und/oder in vertikal nach unten gerichteter Richtung auf die Geflügeltiere ausgeübt.

Eine bevorzugte Weiterbildung der erfindungsgemäßen Vorrichtung ist dadurch gekennzeichnet, dass die Rotationskörper um vertikale und/oder horizontal gerichtete Rotationsachsen antreibbar sind. Auf jeder Seite des Transportpfades können ein Rotationskörper oder zwei oder mehrere Rotationskörper angeordnet sein. Die Ausrichtung der Rotationsachsen kann gleich oder abweichend voneinander sein. Durch Rotation der Rotationskörper um eine vertikale Rotationsachse kann eine maximale Kraftkomponente in Transportrichtung T erzeugt werden. Durch Rotation der Rotationskörper um eine horizontale Rotationsachse kann eine maximale Kraftkomponente in vertikaler Richtung erzeugt werden. Selbstverständlich können die Rotationsachsen auch in einem anderen Winkel als der vertikalen und horizontalen Ausrichtung geneigt sein und so Kraftkomponenten in unterschiedliche Richtungen erzeugen.

Vorteilhafterweise weisen die Rotationskörper wahlweise eine Zylinderform oder eine Kegelform auf. Damit ist auf besonders einfache und effektive Weise ein Impuls in Transportrichtung T und/oder in vertikal nach unten gerichteter Richtung auf die Geflügeltiere ausübbar. Im Übrigen sind solche Rotationskörper besonders einfach und günstig herzustellen.

In einer besonders bevorzugten Ausführungsform der erfindungsgemäßen Vorrichtung weisen sämtliche Rotationskörper im Bereich ihrer Mantelfläche flexible Push-Elemente auf, derart, dass die Geflügeltiere einzeln nacheinander mittels der Rotation der Rotationskörper einerseits und der Push-Elemente andererseits greifbar und in den Kanal zwischen die Entfiederungsköpfe drückbar sind. Mit den flexiblen Push-Elementen, beispielsweise Finger oder Laschen aus Gummi oder dergleichen, kann die mittels der Rotation erzeugte Kraftkomponente direkt und sicher auf die Geflügeltiere übertragen werden.

Vorzugsweise ist die Antriebsgeschwindigkeit in Transportrichtung T des Mittels zum aktiven Unterstützen des Eintretens der Geflügeltiere zwischen die beiden Seitenwangen gleich oder größer der Antriebsgeschwindigkeit des Transportmittels. Mit anderen Worten erfolgt der Impuls auf die Geflügeltiere unmittelbar im Übergangsbereich in den Kanal mit der gleichen Geschwindigkeit, mit der die Geflügeltiere an den Schäkeln hängend durch den Kanal transportiert werden, oder eben schneller.

Eine bevorzugte Weiterbildung ist dadurch gekennzeichnet, dass das Mittel zum aktiven Unterstützen des Eintretens der Geflügeltiere zwischen die beiden Seitenwangen unabhängig vom Transportmittel steuerbar ist. Anders ausgedrückt kann durch die stationäre Anordnung des Mittels zum aktiven Unterstützen des Eintretens der Geflügelkörper zwischen die beiden Seitenwangen einerseits und die Unabhängigkeit der Steuerungen andererseits auf eine zeitliche und/oder positionsbezogene Abstimmung der Steuerung zwischen dem Betätigen des Mittels zum aktiven Unterstützen des Eintretens der Geflügelkörper zwischen die beiden Seitenwangen und der Antriebsgeschwindigkeit des Transportmittels verzichtet werden. Beispielsweise kann das Mittel zum aktiven Unterstützen des Eintretens der Geflügeltiere zwischen die beiden Seitenwangen und die daran angeordneten Mittel zum Entfiedern dauerhaft und konstant rotierend angetrieben sein, unabhängig von der Antriebsgeschwindigkeit des Transportmittels. Dadurch wird die Vorrichtung im Aufbau und in der Handhabung einfacher und günstiger.

Die Aufgabe wird auch durch ein Verfahren gemäß Anspruch 10 dadurch gelöst, dass jedes Geflügeltier beim Eintreten zwischen die beiden Seitenwangen und die daran angeordneten Mittel zum Entfiedern aktiv durch ein stationär im Eintrittsbereich E der Geflügeltiere in den Kanal befindliches Mittel unterstützt wird, indem mittels des Mittels auf die Geflügeltiere eine mechanische Kraftkomponente in Transportrichtung T der Geflügeltiere und/oder vertikal nach unten gerichtet aufgebracht wird. Jedes Geflügeltier wird dadurch unmittelbar vor dem Eintritt in den Kanal nach unten gestreckt und/oder in der gestreckten Position in den Kanal gedrückt.

Vorteilhafterweise wird das Mittel zum aktiven Unterstützen des Eintretens der Geflügeltiere zwischen die beiden Seitenwangen unabhängig vom Transportmittel gesteuert. Das bedeutet, dass für die Prozesssteuerung auf eine zwangsläufige Abhängigkeit oder Synchronisation zwischen den Mitteln zum Ziehen und/oder Drücken und dem Transportmittel verzichtet werden kann, wodurch eine flexible und sichere Prozesssteuerung gewährleistet ist.

Weitere sich im Zusammenhang mit dem erfindungsgemäßen Verfahren ergebenden Vorteile wurden bereits im Zusammenhang mit der erfindungsgemäßen Vorrichtung, die sich insbesondere zur Durchführung des Verfahrens eignet, erläutert, weshalb zur Vermeidung von Wiederholungen auf die entsprechenden Passagen verwiesen wird.

Weitere zweckmäßige und/oder vorteilhafte Merkmale und Weiterbildungen der Erfindung ergeben sich aus den Unteransprüchen und der Beschreibung. Besonders bevorzugte Ausführungsformen der erfindungsgemäßen Vorrichtungen werden anhand der beigefügten Zeichnung näher erläutert. In der Zeichnung zeigt:
- Fig. 1: eine schematische Darstellung einer erfindungsgemäßen Vorrichtung in Vorderansicht mit Seitenwangen in auseinandergezogener Warteposition,
- Fig. 2: eine schematische Darstellung der die Mittel zum Entfiedern tragenden Seitenwangen in Vorderansicht in Arbeitsposition,
- Fig. 3: eine erste Ausführungsform der stationären Mittel zum aktiven Unterstützen des Eintretens der Geflügeltiere zwischen die beiden Seitenwangen und die daran angeordneten Mittel zum Entfiedern,
- Fig. 4: eine weitere Ausführungsform der stationären Mittel zum aktiven Unterstützen des Eintretens der Geflügeltiere zwischen die beiden Seitenwangen und die daran angeordneten Mittel zum Entfiedern,
- Fig. 5: eine weitere Ausführungsform der stationären Mittel zum aktiven Unterstützen des Eintretens der Geflügeltiere zwischen die beiden Seitenwangen und die daran angeordneten Mittel zum Entfiedern,
- Fig. 6: eine weitere Ausführungsform der stationären Mittel zum aktiven Unterstützen des Eintretens der Geflügeltiere zwischen die beiden Seitenwangen und die daran angeordneten Mittel zum Entfiedern,
- Fig. 7: eine weitere Ausführungsform der stationären Mittel zum aktiven Unterstützen des Eintretens der Geflügeltiere zwischen die beiden Seitenwangen und die daran angeordneten Mittel zum Entfiedern, und
- Fig. 8: a bis f) eine Auswahl unterschiedlicher Rotationskörper.

Die in der Zeichnung dargestellte Vorrichtung dient zum Rupfen bzw. Entfiedern von bereits getöteten Geflügeltieren, nämlich Hühnern. Die Erfindung ist jedoch in gleichem Maße zum Rupfen/Entfiedern anderer Geflügeltiere, wie z.B. Enten, Gänse einsetzbar.

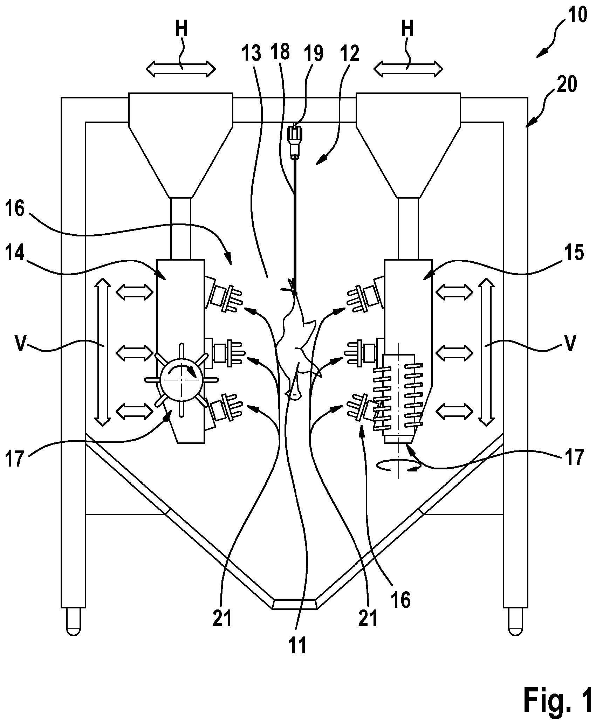

In der Figur 1 ist eine Vorrichtung 10 dargestellt, die zum automatischen Entfiedern getöteter Geflügeltiere 11 ausgebildet und eingerichtet ist. Die Vorrichtung 10 umfasst ein Transportmittel 12, das zum frei nach unten hängenden Transport von an ihren Füßen aufgehängten Geflügeltieren 11 in Transportrichtung T entlang eines Transportpfads ausgebildet und eingerichtet ist. Des Weiteren umfasst die Vorrichtung 10 zwei beabstandet zueinander und auf einander gegenüberliegenden Seiten des Transportpfads angeordnete und einen Kanal 13 bildende Seitenwangen 14, 15, die auf ihren einander zugekehrten, dem Transportpfad zugewandten Innenseiten jeweils Mittel 16 zum Entfiedern der durch den Kanal 13 transportierten Geflügeltiere 11 aufweisen, wobei die Mittel 16 zum Entfiedern mit den zu entfiedernden Geflügeltieren 11 in Kontakt bringbar sind.

Diese Vorrichtung 10 zeichnet sich erfindungsgemäß dadurch aus, dass die Vorrichtung 10 ein stationäres Mittel 17 zum aktiven Unterstützen des Eintretens der Geflügeltiere 11 zwischen die beiden Seitenwangen 14, 15 und die daran angeordneten Mittel 16 zum Entfiedern umfasst, das im Eintrittsbereich E der Geflügeltiere 11 in den Kanal 13 angeordnet ist. Das stationäre Mittel 17 zum aktiven Unterstützen des Eintretens der Geflügeltiere 11 zwischen die beiden Seitenwangen 14, 15 kann ein Element, zwei oder mehr Elemente umfassen und ist in Transportrichtung T unmittelbar vor dem Kanal 13 angeordnet, so dass die Geflügeltiere 11 beim Transport in Transportrichtung T zuerst auf das Mittel 17 zum aktiven Unterstützen des Eintretens der Geflügeltiere 11 zwischen die beiden Seitenwangen 14, 15 treffen, bevor sie in den Kanal 13 eintreten, indem sie durch das Mittel 17 in Transportrichtung T gedrückt werden.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können.

Die in der Figur 1 dargestellte Vorrichtung 10 weist als Transportmittel 12 einen so genannten Overhead-Förderer auf. Ein Overhead-Förderer ist z.B. ein über-Kopf-Förderer oder Deckenförderer, der es ermöglicht, dass die vertikal gerichteten Geflügeltiere 11 Kopf nach unten hängend transportiert werden. Dabei sind die Geflügeltiere 11 mit ihren Füßen bzw. Beinen in Schäkeln 18 hängend transportierbar. Eine Vielzahl solcher Schäkel 18 ist am vorzugsweise endlosen Förderelement 19, beispielsweise eine Förderkette, angeordnet. Das Förderelement 19 ist durch nicht dargestellte Antriebsmittel antreibbar und mittels einer ebenfalls nicht dargestellten Steuerung bezüglich der Antriebsgeschwindigkeit steuerbar.

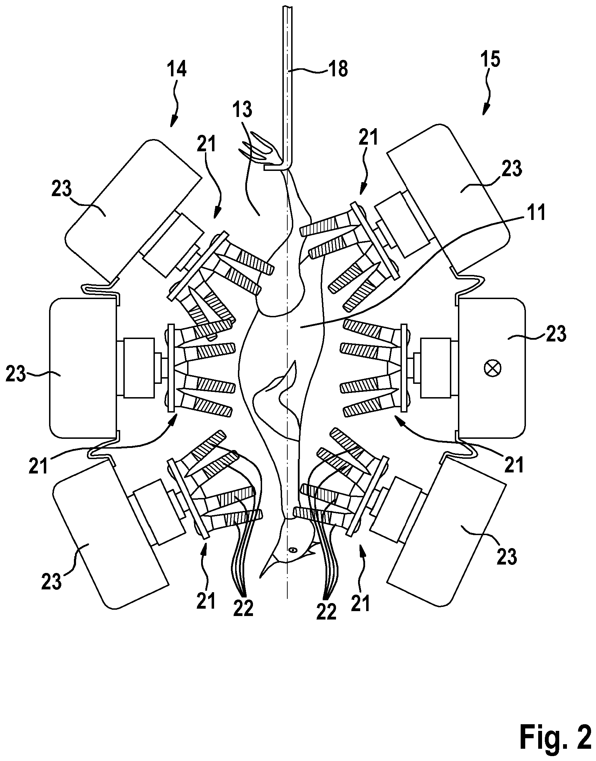

Die Vorrichtung 10 in der dargestellten Ausführungsform weist ein Gestell 20 auf, an dem das Transportmittel 12 angeordnet ist. Die Seitenwangen 14, 15 sind ebenfalls an dem Gestell 20 angeordnet, und zwar mit einer vertikalen (siehe Pfeil V) und horizontalen (siehe Pfeil H) Verstellmöglichkeit der Seitenwangen 14, 15 zum Bewegen der Seitenwangen 14, 15 aus einer Warte- und Wartungsposition (siehe Figur 1) in eine Arbeitsposition (siehe z.B. Figur 2) und zurück sowie zum Anpassen der Vorrichtung 10 an unterschiedliche Geflügelgrößen. Auf den Innenseiten der Seitenwangen 14, 15 sind jeweils vorzugsweise mehrere Reihen, in der dargestellten Ausführungsform drei, der Mittel 16 zum Entfiedern der Geflügelkörper 11 angeordnet, die sich nahezu über die ganze Länge des Kanals 13 erstrecken.

Das Mittel 17 zum aktiven Unterstützen des Eintretens der Geflügeltiere 11 zwischen die beiden Seitenwangen 14, 15 ist zur Aufbringung einer mechanischen Kraftkomponente in Transportrichtung T der Geflügeltiere 11 ausgebildet und eingerichtet. Alternativ oder kumulativ ist das Mittel 17 zum aktiven Unterstützen des Eintretens der Geflügeltiere 11 zwischen die beiden Seitenwangen 14, 15 zur Aufbringung einer vertikal nach unten gerichteten Kraftkomponente ausgebildet und eingerichtet. Jede Kraftkomponente für sich erleichtert das Einführen bzw. Eintreten der Geflügeltiere 11 in den Kanal 13. Die Kombination der Kraftkomponenten ist besonders bevorzugt. Die Kraftkomponenten beschreiben einen aktiven mechanischen Impuls auf jedes einzelne Geflügeltier 11, das den Eintrittsbereich E passiert und dieses quasi in gestreckter Weise in den Kanal 13 hineindrückt.

Die Seitenwangen 14, 15 können in Transportrichtung T konvergierend ausgerichtet sein, und zwar nur im Eintrittsbereich E, oder über die gesamte Länge des Kanals 13. Die Seitenwangen 14, 15 können auch nur im Wesentlichen parallel zueinander verlaufen. Vorzugsweise sind die Seitenwangen 14, 15 jedoch durchgängig parallel zueinander angeordnet und ausgerichtet. An ihren Innenseiten sind jeweils mehrere stationäre Entfiederungsköpfe 21 als Mittel 16 zum Entfiedern rotierend antreibbar gelagert. Das bedeutet, dass die Entfiederungsköpfe 21 in der Arbeitsposition, also während der Bearbeitung, ortsfest und gerade nicht mit den Geflügeltieren 11 mitlaufend sind. Die Entfiederungsköpfe 21 sind eine Art Drehscheibe mit axial hervorstehenden Fingern 22 oder dergleichen aus Gummi oder einem vergleichbaren, flexiblen Material. In einer Reihe sind mehrere Entfiederungsköpfe 21 hintereinander angeordnet. Bevorzugt sind drei Reihen solcher Entfiederungsköpfe 21 untereinander vorgesehen, um das Gefieder der Geflügeltiere 11 über den gesamten Körper rupfen zu können. Die Entfiederungsköpfe 21 sind vorzugsweise rotierend antreibbar. Der Antrieb kann über Einzelantriebe erfolgen. Bevorzugt ist für jede Reihe ein gemeinsamer Antrieb vorgesehen. Die Position, insbesondere die Neigung der Entfiederungsköpfe 21 kann individuell einstellbar ausgestaltet sein. Die Seitenwangen 14, 15 können durchgängige Seitenwände sein. Bevorzugt bilden jedoch in Abhängigkeit der Anzahl der Reihen von Entfiederungsköpfen 21 einzelne Leisten 23, im Beispiel sind es drei Leisten 23, eine Seitenwange 14, 15. Die Leisten 23 einer Seitenwange 14, 15 sind vorzugsweise in ihrer Position und relativ zueinander verstellbar ausgebildet.

Das Mittel 17 zum aktiven Unterstützen des Eintretens der Geflügeltiere 11 zwischen die beiden Seitenwangen 14, 15 umfasst mindestens einen rotierend antreibbaren Rotationskörper 24, vorzugsweise jedoch mindestens zwei rotierend antreibbare Rotationskörper 24, die auf einander gegenüberliegenden Seiten des Transportpfads angeordnet sind. Vorzugsweise ist auf jeder Seite des Kanals 13 jeweils ein Rotationskörper 24 angeordnet, die zusammen das Mittel 17 bilden. Die beiden Rotationskörper 24 können identisch oder unterschiedlich ausgebildet sein. In jedem Fall sind die Rotationskörper 24 in Transportrichtung T vor dem Kanal 13 angeordnet und derart ausgebildet und eingerichtet, dass sie mit den Geflügeltieren 11 in Kontakt bringbar sind, bevor diese den Kanal 13 erreichen. Dazu sind die Rotationskörper 24 zusammen mit den Seitenwangen 14, 15 z.B. in Richtung H (siehe Figur 1) verstellbar. In anderen Ausführungsformen können die Rotationskörper 24 auch relativ zu den Seitenwangen 14, 15 verstellbar ausgebildet sein. Für den Fall, dass nur ein einzelner Rotationskörper 24 das Mittel 17 zum aktiven Unterstützen bildet, der dann nur auf einer Seite des Transportpfads angeordnet ist, kann optional ein Gegenhalter auf der gegenüberliegenden Seite des Transportpfads vorgesehen sein, der beispielsweise am Geflügeltier 11 selbst oder z.B. am Schäkel 18 angreift. Die Anzahl und Positionierung der das Mittel 17 zum aktiven Unterstützen bildenden Rotationskörper 24 kann von der Größe der aufzubringenden Kraft abhängen.

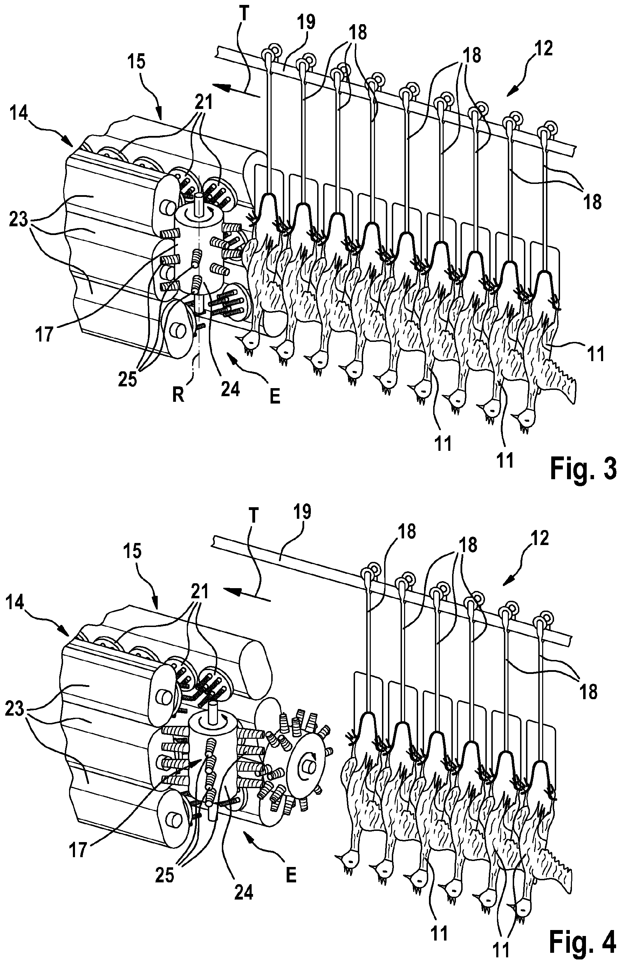

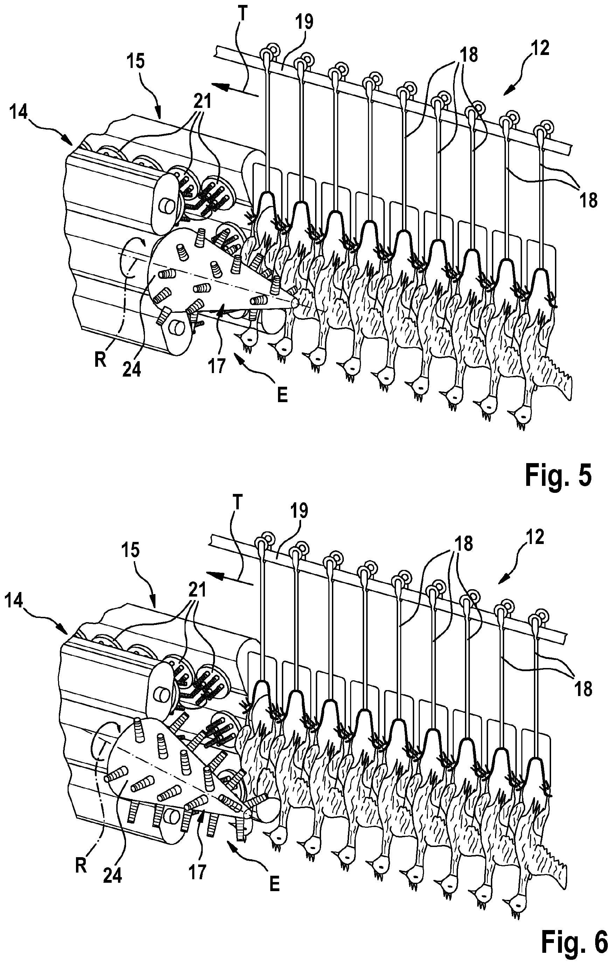

Die Rotationskörper 24 sind mittels nicht dargestellter Antriebsmittel um vertikale und/oder horizontal gerichtete Rotationsachsen R antreibbar. In der Figur 1 sind beide Varianten dargestellt. Die Figuren 3 und 4 zeigen weitere Ausführungsformen mit einer vertikal gerichteten Rotationsachse R. Der besseren Übersicht halber sind in den genannten Figuren jeweils nur auf einer Seite des Kanals 13 die Rotationskörper 24 eingezeichnet. Selbstverständlich sind die Rotationskörper 24 auf beiden Seiten angeordnet, vorzugsweise symmetrisch auf beiden Seiten des Transportpfads. In der Figur 4 sind auf jeder Seite des Kanals 13 z.B. zwei Rotationskörper 24 angeordnet, nämlich in der gezeigten Ausführungsform ein Rotationskörper 24 mit einer vertikal gerichteten Rotationsachse R und ein Rotationskörper 24 mit einer horizontal gerichteten Rotationsachse R. Aus den Figuren 5 bis 7 wird deutlich, dass die Rotationsachsen R auch Winkel zwischen der vertikalen und horizontalen Ausrichtung aufweisen können. Die Rotationsachsen R können z.B. in Abhängigkeit des Typs des zu bearbeitenden Produkts, der Größe des Geflügeltiers 11, in unterschiedliche Richtungen geneigt sein. Die Rotationachse R kann z.B. parallel zur Transportrichtung T ausgerichtet und nach unten geneigt sein. Die Rotationsachse R kann des Weiteren nach unten und auf den Transportpfad zu oder von diesem weg geneigt sein. Andere Neigungen und Ausrichtungen sind aber ebenfalls möglich.

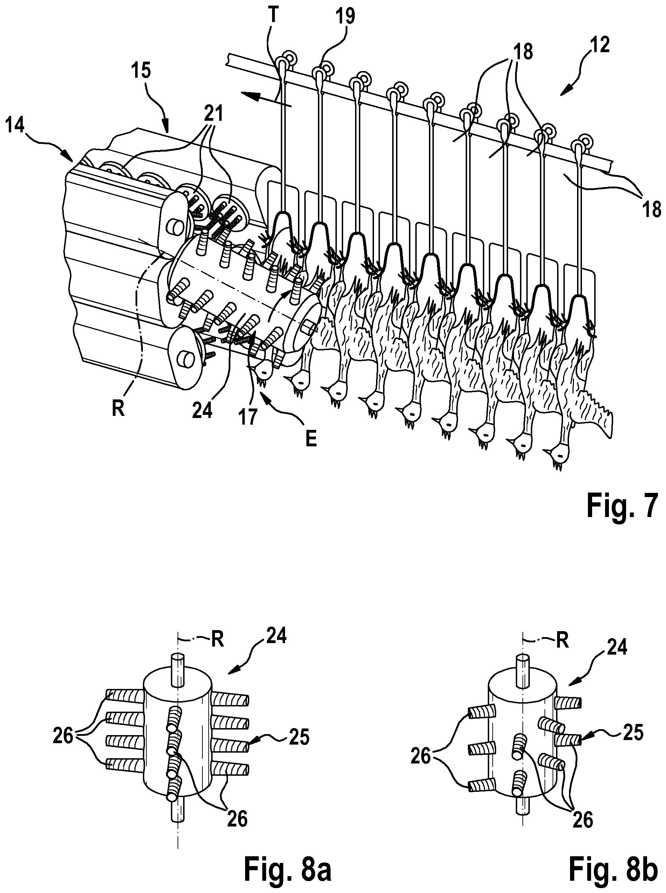

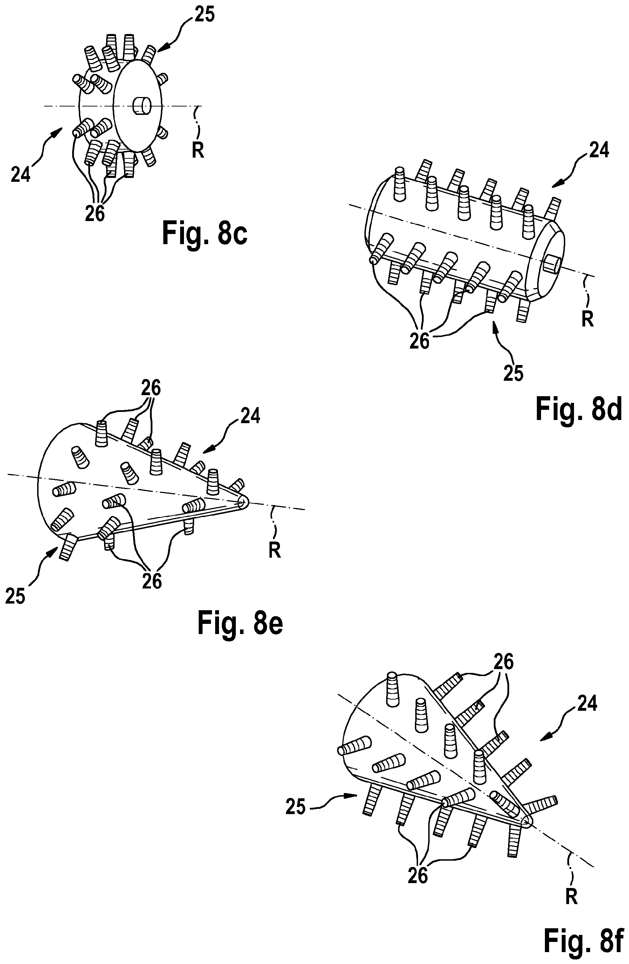

Die Rotationskörper 24 weisen in den dargestellten Ausführungsformen wahlweise eine Zylinderform oder eine Kegelform auf. Andere Ausgestaltungen der Rotationskörper 24 sind aber ebenfalls einsetzbar, beispielsweise als dreieckförmige oder rechteckförmige oder pyramidenförmige oder konvexe oder konkave Körper. Insbesondere können auch asymmetrische Rotationkörper 24 eingesetzt werden. Anstelle der Rotationskörper 24 können auch andere aktiv betriebene Einführhilfen, z.B. schwenkbare Klappen, Paddel oder dergleichen eingesetzt werden. Sämtliche Rotationskörper 24, unabhängig von ihrer Gestalt und ihrer Ausrichtung, weisen vorzugsweise im Bereich ihrer Mantelfläche flexible Push-Elemente 25 auf, derart, dass die Geflügeltiere 11 einzeln nacheinander mittels der Rotation der Rotationskörper 24 einerseits und der Push-Elemente 25 andererseits greifbar und in den Kanal 13 zwischen die Entfiederungsköpfe 21 drückbar sind. Diese Push-Elemente 25 sind in der gezeigten Ausführungsform Finger 26, vergleichbar den Fingern 22 der Entfiederungsköpfe 21. Die Anzahl und Anordnung sowie Ausrichtung der Finger 26 kann variieren. Besonders bevorzugt ist eine schraubenförmige und/oder geneigte und/oder schneckenförmige Anordnung und Ausrichtung. Die Finger 26 können aber auch gleichmäßig verteilt über die Mantelfläche verteilt sein. Unterschiedliche Varianten der Rotationskörper 24 sind der Figur 8 a bis f zu entnehmen, nämlich z.B. Walzen, Trommeln etc., die auf ihrer Mantelfläche die Finger 26 aufweisen. Anstelle der Finger 26 können auch Noppen, Vorsprünge oder andere für den Eingriff in das Gefieder der Geflügeltiere 11 geeignete Oberflächenstrukturen ausgebildet sein. Die Ausbildung der Push-Elemente 25 z.B. als weiche oder harte Finger 26 kann Einfluss auf die Größe der aufzubringenden Kraft haben.

Die Anordnung und Ausrichtung der Finger 26 sowie deren Abstände voneinander können zu der Transportgeschwindigkeit der Schäkel 18 bzw. der daran hängenden Geflügeltiere 11 korrespondieren. Vorzugsweise ist die Antriebsgeschwindigkeit in Transportrichtung T des Mittels 17 zum aktiven Unterstützen des Eintretens der Geflügeltiere 11 zwischen die beiden Seitenwangen 14, 15 gleich oder größer der Antriebsgeschwindigkeit des Transportmittels 12. Die Antriebsgeschwindigkeiten der beiden Rotationskörper 24 eines Mittels 17 können gleich oder auf den einander gegenüber liegenden Seiten auch unterschiedlich sein. Die Antriebsgeschwindigkeit jedes Rotationskörpers 24 kann in Abhängigkeit der Antriebsgeschwindigkeit des Transportmittels 12 steuerbar sein. In einer beispielhaften Ausführungsform kann das Antriebsmittel des Transportmittels 12 abhängig oder synchronisiert den oder jeden Rotationskörper 24 antreiben, z.B. über ein Schneckengetriebe. In bevorzugten Ausführungsformen kann das Mittel 17 zum aktiven Unterstützen des Eintretens der Geflügeltiere 11 zwischen die beiden Seitenwangen 14, 15 und die daran angeordneten Mittel 16 zum Entfiedern unabhängig vom Transportmittel 12 steuerbar sein. Das schließt nicht aus sondern ausdrücklich mit ein, dass ein synchroner Betrieb der Rotationskörper 24 und des Transportmittels 12 gewährleistet ist. Anders ausgedrückt können die Rotationsgeschwindigkeit der Rotationskörper 24 und die Antriebsgeschwindigkeit des Transportmittels 12 aufeinander abgestimmt, nämlich synchronisiert sein. Allerdings ist auch ein völlig unabhängiger Betrieb der Rotationskörper 24 einerseits und des Transportmittels 12 andererseits sichergestellt.

Im Folgenden wird das erfindungsgemäße Verfahrensprinzip anhand der Zeichnung näher erläutert:
Die Geflügeltiere 11 können maschinell oder manuell mit den Füßen bzw. Beinen z.B. in die Schäkel 18 des Transportmittels 12 eingehängt werden. Mit dem Fördermittel 19 werden die Geflügeltiere 11 dann in Transportrichtung T bewegt, vorzugsweise kontinuierlich. Die Geflügeltiere 11 werden frei nach unten hängend in Transportrichtung T entlang eines Transportpfads transportiert. Beim Transport durch den Kanal 13 werden die Geflügeltiere 11 während des Transports der Geflügeltiere 11 mittels des jeweils an den Innenseiten der Seitenwangen 14, 15 angeordneten Mittels 16 zum Entfiedern entfiedert, indem die Mittel 16 zum Entfiedern beim Transport der Geflügeltiere 11 durch den Kanal 13 mit den Geflügeltieren 11 in Kontakt kommen.

Erfindungsgemäß wird jedes Geflügeltier 11 beim Eintreten zwischen die beiden Seitenwangen 14, 15 und die daran angeordneten Mittel 16 zum Entfiedern aktiv durch ein stationär im Eintrittsbereich E der Geflügeltiere 11 in den Kanal 13 befindliches Mittel 17 unterstützt. Die Unterstützung kann durch das Aufbringen einer Kraftkomponente auf die Geflügeltiere 11 in Transportrichtung T und/oder vertikal nach unten gerichtet erfolgen. Das Aufbringen der Kraftkomponente auf die Geflügeltiere 11 kann von einer Seite des Geflügeltiers 11 oder von beiden Seiten erfolgen.

Bei der Ausführungsform gemäß der Figur 5 sind die Rotationskörper 24 kegelförmig ausgebildet und weisen Gummifinger als Push-Elemente 25 auf. Die Gummifinger sind korrespondierend zum Abstand der Schäkel 18 beabstandet zueinander und schneckenförmig angeordnet. Die Rotationskörper 24 sind derart angetrieben, dass sowohl eine Kraftkomponente in Transportrichtung T als auch eine Kraftkomponente vertikal nach unten gerichtet wirkt. Die Ausführungsformen gemäß der Figuren 6 und 7 weisen ebenfalls eine Neigung der Rotationskörper 24 auf, die zu einer Kraftkomponente in Transportrichtung T und vertikal nach unten gerichtet führen. Bei den vorgenannten Ausführungsformen sind die Rotationsdachsen R horizontal gerichtet bzw. leicht gegenüber der horizontalen Ausrichtung geneigt.

Bei der Ausführungsform gemäß der Figur 3 ist die Rotationsachse R vertikal ausgerichtet. Die schneckenförmige Anordnung der Gummifinger führt dazu, dass wiederum eine Kraftkomponente in Transportrichtung T und vertikal nach unten gerichtet erzeugt wird. Bei der Ausführungsform gemäß der Figur 4 wird die Funktionalität aufgeteilt. Mittels des in Transportrichtung T ersten Rotationskörpers 24 wird aufgrund der horizontal gerichteten Rotationachse R und der regelmäßigen Anordnung der Gummifinger ausschließlich eine Kraftkomponente vertikal nach unten gerichtet erzeugt. Mittels des auf derselben Seite in Transportrichtung T nachfolgenden Rotationskörpers 24 wird aufgrund der vertikal gerichteten Rotationsachse R und der regelmäßigen Anordnung der Gummifinger ausschließlich eine Kraftkomponente in Transportrichtung T erzeugt.

## Patentansprüche

1. Vorrichtung (10), ausgebildet und eingerichtet zum automatischen Entfiedern getöteter Geflügeltiere (11), umfassend ein Transportmittel (12), ausgebildet und eingerichtet zum frei nach unten hängenden Transport von an ihren Füßen aufgehängten Geflügeltieren (11) in Transportrichtung T entlang eines Transportpfads, sowie zwei beabstandet zueinander und auf einander gegenüberliegenden Seiten des Transportpfads angeordnete und einen Kanal (13) bildende Seitenwangen (14, 15), die auf ihren einander zugekehrten, dem Transportpfad zugewandten Innenseiten jeweils Mittel (16) zum Entfiedern der durch den Kanal (13) transportierten Geflügeltiere (11) aufweisen, wobei die Mittel (16) zum Entfiedern mit den zu entfiedernden Geflügeltieren (11) in Kontakt bringbar sind, wobei die Vorrichtung (10) ein stationäres Mittel (17) zum aktiven Unterstützen des Eintretens der Geflügeltiere (11) zwischen die beiden Seitenwangen (14, 15) und die daran angeordneten Mittel (16) zum Entfiedern umfasst, das im Eintrittsbereich E der Geflügeltiere (11) in den Kanal (13) angeordnet ist, **dadurch gekennzeichnet, dass** das Mittel (17) zum aktiven Unterstützen des Eintretens der Geflügeltiere (11) zwischen die beiden Seitenwangen (14, 15) zur Aufbringung einer mechanischen Kraftkomponente in Transportrichtung T der Geflügeltiere (11) ausgebildet und eingerichtet ist.

2. Vorrichtung (10) nach Anspruch 1, **dadurch gekennzeichnet, dass** das Mittel (17) zum aktiven Unterstützen des Eintretens der Geflügeltiere (11) zwischen die beiden Seitenwangen (14, 15) zur Aufbringung einer vertikal nach unten gerichteten Kraftkomponente ausgebildet und eingerichtet ist.

3. Vorrichtung (10) nach Anspruch 1 oder 2, **dadurch gekennzeichnet, dass** die Seitenwangen (14, 15) durchgängig parallel zueinander angeordnet und ausgerichtet sind und an ihren Innenseiten jeweils mehrere stationäre Entfiederungsköpfe (21) als Mittel (16) zum Entfiedern rotierend antreibbar gelagert sind.

4. Vorrichtung (10) nach einem der Ansprüche 1 bis 3, **dadurch gekennzeichnet, dass** das Mittel (17) zum aktiven Unterstützen des Eintretens der Geflügeltiere (11) zwischen die beiden Seitenwangen (14, 15) mindestens zwei rotierend antreibbare Rotationskörper (24) umfasst, die auf einander gegenüberliegenden Seiten des Transportpfads angeordnet sind.

5. Vorrichtung (10) nach Anspruch 4, **dadurch gekennzeichnet, dass** die Rotationskörper (24) um vertikale und/oder horizontal gerichtete Rotationsachsen R antreibbar sind.

6. Vorrichtung (10) nach Anspruch 4 oder 5, **dadurch gekennzeichnet, dass** die Rotationskörper (24) wahlweise eine Zylinderform oder eine Kegelform aufweisen.

7. Vorrichtung (10) nach einem der Ansprüche 4 bis 6, **dadurch gekennzeichnet, dass** sämtliche Rotationskörper (24) im Bereich ihrer Mantelfläche flexible Push-Elemente (25) aufweisen, derart, dass die Geflügeltiere (11) einzeln nacheinander mittels der Rotation der Rotationskörper (24) einerseits und der Push-Elemente (25) andererseits greifbar und in den Kanal (13) zwischen die Entfiederungsköpfe (21) drückbar sind.

8. Vorrichtung (10) nach einem der Ansprüche 1 bis 7, **dadurch gekennzeichnet, dass** die Antriebsgeschwindigkeit in Transportrichtung T des Mittels (17) zum aktiven Unterstützen des Eintretens der Geflügeltiere (11) zwischen die beiden Seitenwangen (14, 15) gleich oder größer der Antriebsgeschwindigkeit des Transportmittels (12) ist.

9. Vorrichtung (10) nach einem der Ansprüche 1 bis 8, **dadurch gekennzeichnet, dass** das Mittel (17) zum aktiven Unterstützen des Eintretens der Geflügeltiere (11) zwischen die beiden Seitenwangen (14, 15) unabhängig vom Transportmittel (12) steuerbar ist.

10. Verfahren zum automatischen Entfiedern getöteter Geflügeltiere (11), umfassend die Schritte:
- Transportieren der an ihren Füßen aufgehängten und frei nach unten hängenden Geflügeltiere (11) in Transportrichtung T entlang eines Transportpfads mittels eines Transportmittels (12),
- Entfiedern der Geflügeltiere (11) während des Transports der Geflügeltiere (11) entlang eines durch zwei beabstandet zueinander und auf einander gegenüberliegenden Seiten des Transportpfads angeordnete Seitenwangen (14, 15) gebildeten Kanals (13) mittels jeweils an den Innenseiten der Seitenwangen (14, 15) angeordneten Mitteln (16) zum Entfiedern,
- indem die Mittel (16) zum Entfiedern beim Transport der Geflügeltiere (11) durch den Kanal (13) mit den Geflügeltieren (11) in Kontakt kommen,
**dadurch gekennzeichnet, dass** jedes Geflügeltier (11) beim Eintreten zwischen die beiden Seitenwangen (14, 15) und die daran angeordneten Mittel (16) zum Entfiedern aktiv durch ein stationär im Eintrittsbereich E der Geflügeltiere (11) in den Kanal (13) befindliches Mittel (17) unterstützt wird, indem mittels des Mittels (17) auf die Geflügeltiere (11) eine mechanische Kraftkomponente in Transportrichtung T der Geflügeltiere (11) und/oder vertikal nach unten gerichtet aufgebracht wird.

11. Verfahren nach Anspruch 10, **dadurch gekennzeichnet, dass** das Mittel (17) zum aktiven Unterstützen des Eintretens der Geflügeltiere (11) zwischen die beiden Seitenwangen (14, 15) unabhängig vom Transportmittel (12) gesteuert wird.

## Claims

1. Apparatus (10) configured and designed for automatic defeathering of slaughtered poultry (11), comprising a transport means (12) configured and designed for freely hanging transport of poultry (11) suspended from their feet, in the transport direction (T) along a transport path, and two side cheeks (14, 15) spaced apart and arranged on opposite sides of the transport path and forming a channel (13), which on their insides facing each other and turned towards the transport path each have means (16) for defeathering the poultry (11) transported through the channel (13), wherein the defeathering means can be brought into contact with the poultry (11) to be defeathered, wherein the apparatus (10) has a stationary means (17) for active support of entry of the poultry (11) between the two side cheeks (14, 15) and the defeathering means (16) arranged thereon, which is arranged in the inlet region (E) of the poultry (11) into the channel (13), **characterised in that** the means (17) for active support of entry of the poultry (11) between the two side cheeks (14, 15) is configured and designed to apply a mechanical force component in the transport direction (T) of the poultry (11).

2. Apparatus (10) according to claim 1, **characterised in that** the means (17) for active support of entry of the poultry (11) between the two side cheeks (14, 15) is configured and designed to apply a vertically downwardly directed force component.

3. Apparatus (10) according to claim 1 or 2, **characterised in that** the side cheeks (14, 15) are arranged and oriented parallel to each other throughout, and on each of their insides are mounted several stationary defeathering heads (21) which can be driven in rotation as defeathering means (16).

4. Apparatus (10) according to any one of claims 1 to 3, **characterised in that** the means (17) for active support of entry of the poultry (11) between the two side cheeks (14, 15) comprises at least two rotational bodies (24) which can be driven in rotation and are arranged on opposite sides of the transport path.

5. Apparatus (10) according to claim 4, **characterised in that** the rotational bodies (24) can be driven about rotation axes (R) oriented vertically and/or horizontally.

6. Apparatus (10) according to claim 4 or 5, **characterised in that** the rotational bodies (24) have either a cylindrical form or a conical form.

7. Apparatus (10) according to any one of claims 4 to 6, **characterised in that** all rotational bodies (24) in the region of their casing surface have flexible push elements (25) such that the poultry birds (11) can be gripped individually in succession, firstly by rotation of the rotational bodies (24) and secondly by the push elements (25), and pushed into the channel (13) between the defeathering heads (21).

8. Apparatus (10) according to any one of claims 1 to 7, **characterised in that** the drive speed in the transport direction (T) of the means (17) for active support of entry of the poultry (11) between the two side cheeks (14, 15) is the same as or greater than the drive speed of the transport means (12).

9. Apparatus (10) according to any one of claims 1 to 8, **characterised in that** the means (17) for active support of entry of the poultry (11) between the two side cheeks (14, 15) can be controlled independently of the transport means (12).

10. Method for automatic defeathering of slaughtered poultry (11), comprising the steps:
- transport of the poultry (11) suspended from their feet and hanging freely downwards, in the transport direction (T) along a transport path by means of a transport means (12),
- defeathering of the poultry (11) during transport of the poultry (11) along a channel (13) formed by two side cheeks (14, 15) spaced apart and arranged on opposite sides of the transport path, by means of defeathering means (16) arranged on the insides of the transport side cheeks (14, 15),
- in that the defeathering means (16) come into contact with the poultry (11) on transport of the poultry (11) through the channel (13),
**characterised in that** on entry between the two side cheeks (14, 15) and the defeathering means (16) arranged thereon, each poultry bird (11) is actively supported by a means (17) located stationarily in the inlet region E of the poultry (11) into the channel (13), **in that** the means (17) apply a mechanical force component to the poultry (11) in the transport direction (T) of the poultry (11) and/or directed vertically downwards.

11. Method according to claim 10, **characterised in that** the means (17) for active support of entry of the poultry (11) between the two side cheeks (14, 15) is controlled independently of the transport means (12).

## Revendications

1. Dispositif (10), configuré et adapté pour le déplumage automatique de volailles mortes (11), comprenant un moyen de transport (12), configuré et adapté pour le transport en suspension libre vers le bas de volailles (11) suspendues par leurs pattes dans la direction de transport T le long d'un chemin de transport, ainsi que deux joues latérales (14, 15) agencées à distance l'une de l'autre et sur des côtés opposés l'un à l'autre du chemin de transport et formant un canal (13), qui présentent sur leurs côtés intérieurs orientés l'un vers l'autre, tournés vers le chemin de transport, respectivement des moyens (16) pour le déplumage des volailles (11) transportées à travers le canal (13), les moyens (16) pour le déplumage pouvant être amenés en contact avec les volailles à déplumer (11), le dispositif (10) comprenant un moyen stationnaire (17) pour le soutien actif de l'entrée des volailles (11) entre les deux joues latérales (14, 15) et les moyens (16) pour le déplumage agencés sur celles-ci, qui est agencé dans la zone d'entrée E des volailles (11) dans le canal (13), **caractérisé en ce que** le moyen (17) pour le soutien actif de l'entrée des volailles (11) entre les deux joues latérales (14, 15) est configuré et adapté pour appliquer une composante de force mécanique dans la direction de transport T des volailles (11).

2. Dispositif (10) selon la revendication 1, **caractérisé en ce que** le moyen (17) pour le soutien actif de l'entrée des volailles (11) entre les deux joues latérales (14, 15) est configuré et adapté pour appliquer une composante de force dirigée verticalement vers le bas.

3. Dispositif (10) selon la revendication 1 ou 2, **caractérisé en ce que** les joues latérales (14, 15) sont agencées et dirigées de manière continue parallèlement l'une à l'autre et plusieurs têtes de déplumage stationnaires (21) sont montées respectivement sur leurs côtés intérieurs de manière à pouvoir être entraînées en rotation en tant que moyens (16) pour le déplumage.

4. Dispositif (10) selon l'une quelconque des revendications 1 à 3, **caractérisé en ce que** le moyen (17) pour le soutien actif de l'entrée des volailles (11) entre les deux joues latérales (14, 15) comprend au moins deux corps de rotation (24) pouvant être entraînés en rotation, qui sont agencés sur des côtés opposés l'un à l'autre du chemin de transport.

5. Dispositif (10) selon la revendication 4, **caractérisé en ce que** les corps de rotation (24) peuvent être entraînés autour d'axes de rotation R dirigés verticalement et/ou horizontalement.

6. Dispositif (10) selon la revendication 4 ou 5, **caractérisé en ce que** les corps de rotation (24) présentent au choix une forme cylindrique ou une forme conique.

7. Dispositif (10) selon l'une quelconque des revendications 4 à 6, **caractérisé en ce que** tous les corps de rotation (24) présentent des éléments poussoirs flexibles (25) dans la zone de leur surface d'enveloppe, de telle sorte que les volailles (11) peuvent être saisies individuellement les unes après les autres au moyen de la rotation des corps de rotation (24) d'une part et des éléments poussoirs (25) d'autre part, et peuvent être poussées dans le canal (13) entre les têtes de déplumage (21).

8. Dispositif (10) selon l'une quelconque des revendications 1 à 7, **caractérisé en ce que** la vitesse d'entraînement dans la direction de transport T du moyen (17) pour le soutien actif de l'entrée des volailles (11) entre les deux joues latérales (14, 15) est égale ou supérieure à la vitesse d'entraînement du moyen de transport (12).

9. Dispositif (10) selon l'une quelconque des revendications 1 à 8, **caractérisé en ce que** le moyen (17) pour le soutien actif de l'entrée des volailles (11) entre les deux joues latérales (14, 15) est commandable indépendamment du moyen de transport (12).

10. Procédé de déplumage automatique de volailles mortes (11), comprenant les étapes suivantes :
- le transport des volailles (11) suspendues par leurs pattes et en suspension libre vers le bas dans la direction de transport T le long d'un chemin de transport au moyen d'un moyen de transport (12),
- le déplumage des volailles (11) pendant le transport des volailles (11) le long d'un canal (13) formé par deux joues latérales (14, 15) agencées à distance l'une de l'autre et sur des côtés opposés l'un à l'autre du chemin de transport, au moyen de moyens (16) pour le déplumage agencés respectivement sur les côtés intérieurs des joues latérales (14, 15),
- par le fait que les moyens (16) pour le déplumage viennent en contact avec les volailles (11) lors du transport des volailles (11) à travers le canal (13),
**caractérisé en ce que** chaque volaille (11), lors de l'entrée entre les deux joues latérales (14, 15) et les moyens (16) pour le déplumage agencés sur celles-ci, est soutenue activement par un moyen (17) se trouvant de manière stationnaire dans la zone d'entrée E des volailles (11) dans le canal (13), par le fait qu'une composante de force mécanique est appliquée au moyen du moyen (17) sur les volailles (11) dans la direction de transport T des volailles (11) et/ou dirigée verticalement vers le bas.

11. Procédé selon la revendication 10, **caractérisé en ce que** le moyen (17) pour le soutien actif de l'entrée des volailles (11) entre les deux joues latérales (14, 15) est commandé indépendamment du moyen de transport (12).
